# EUROPEAN PATENT SPECIFICATION

(11) **EP 3 047 314 B1**
(45) Date of publication and mention of the grant of the patent: **20.02.2019**
(21) Application number: 14777244.6
(22) Date of filing: 17.09.2014
(51) Int. Cl.: G02B 5/08, C03C 17/34, C03C 17/36

(54) **DIELECTRIC MIRROR**
DIELEKTRISCHER SPIEGEL
MIROIR DIÉLECTRIQUE

(30) Priority: 18.09.2013 US 201314030076
(43) Date of publication of application: 27.07.2016
(73) Proprietor: Guardian Europe S.à.r.l., 8070 Bertrange (LU)
(72) Inventor: VIKOR, Gyorgy, H-5900 Oroshaza (HU)
(74) Representative: Hoyng Rokh Monegier LLP
(86) International application number: PCT/US2014/056105
(87) International publication number: WO 2015/042157

(56) References cited:
- JP-A- S5 811 901
- JP-A- 2002 182 020
- US-A1- 2011 164 157
- US-A1- 2012 177 899
- MOTOVILOV O A: "Optical properties of sputtered multilayer dielectric mirrors", SOVIET JOURNAL OF OPTICAL TECHNOLOGY, AMERICAN INSTITUTE OF PHYSICS, NEW YORK, NY, US, vol. 34, no. 5, 1 September 1967 (1967-09-01), pages 595-599, XP008173570, ISSN: 0038-5514

## Description

Example embodiments of this invention relate to dielectric mirrors. Certain example embodiments relate to dielectric mirrors which realize film side and/or glass side visible reflection of from about 50-90% (more preferably from about 60-80% and most preferably from about 65-75%) and visible transmission of from about 10-50% (more preferably from about 10-40%, even more preferably from about 20-40%, and most preferably from about 25-35%).

### BACKGROUND AND SUMMARY OF EXAMPLE EMBODIMENTS OF

### THE INVENTION

Mirrors have been in existence for years and have been used in many applications. Mirrors generally are either (a) first surface mirrors, where the mirror coating is provided between the viewer and the supporting glass substrate, or (b) second surface mirrors, where the supporting glass substrate is interposed between the viewer and the mirror coating. See, for example, U.S. Patent Nos. 7,276,289 and 7,678,459; U.S. Publication Nos. 2006/0077580; 2007/0178316; 2008/0073203; 2008/0164173; 2010/0229853; 2011/0176212; and 2011/0176236.

Mirrors often require the use of a metallic (Al or Ag) reflective layer. However, it would be desirable if mirrors could be provided without the need for a metallic reflective layer of Al or Ag. JP 58-11901 A discloses a multilayered dielectric mirror.

Example embodiments of this invention relate to dielectric mirrors. More particularly, certain example embodiments relate to dielectric mirrors having no metallic reflective layer (e.g., no Ag layer and no Al layer) and which are nonetheless capable of realizing film side and/or glass side visible reflection of from about 50-90% (more preferably from about 60-80% and most preferably from about 65-75%) and visible transmission of from about 10-50% (more preferably from about 10-40%, more preferably from about 20-40%, and most preferably from about 25-35%). According to the invention, a layer of or including NiCr, which may be slightly or significantly oxided, is provided. The dielectric mirrors may be first or second surface mirrors in certain example embodiments, given good performance regarding both glass side reflection and film side reflection. The mirrors may or may not be heat treated (e.g., thermally tempered and/or thermally bent) in certain example embodiments. In certain example instances, such dielectric mirrors may be used in consumer, commercial and/or digital signage applications such as picture frames, bathroom mirrors, TVs, and/or electronic devices.

In certain example embodiments of this invention, there is provided a dielectric mirror including a glass substrate supporting a coating, the coating comprising moving away from the glass substrate: a first transparent dielectric high refractive index layer comprising niobium oxide and/or titanium oxide, the first transparent dielectric high refractive index layer having a thickness of from about 70-140 nm; a second transparent dielectric low refractive index layer comprising silicon oxide, the second transparent dielectric low refractive index layer having a thickness of from about 30-140 nm; a third transparent dielectric high refractive index layer comprising niobium oxide and/or titanium oxide; a fourth transparent dielectric low refractive index layer comprising silicon oxide; a fifth transparent dielectric high refractive index layer comprising niobium oxide and/or titanium oxide; wherein the first transparent dielectric high index layer comprising niobium oxide and/or titanium oxide is at least 10 nm thicker than one or both of (a) the third transparent dielectric high refractive index layer comprising niobium oxide and/or titanium oxide, and/or (b) the fifth transparent dielectric high index layer comprising niobium oxide and/or titanium oxide; wherein the coating does not contain any metallic reflective layer based on Al or Ag; and wherein the dielectric mirror has (i) a film side visible reflectance or a glass side visible reflectance of from about 50-90%, and (ii) a visible transmission of from about 10-40%, and wherein the glass side visible reflectance of the mirror is at least about 30% higher or lower than is the film side visible reflectance of the mirror. The mirror comprises a symmetry adjusting layer located between the third transparent dielectric high refractive index layer and the fifth transparent dielectric high refractive index layer. The symmetry adjusting layer comprises NiCr, and may be at least partially oxided. The symmetry adjusting layer may be located between and contacting the third transparent dielectric high refractive index layer and the fourth transparent dielectric low refractive index layer comprising silicon oxide, or may be located between and contacting the fifth transparent dielectric high refractive index layer and the fourth transparent dielectric low refractive index layer comprising silicon oxide.

### BRIEF DESCRIPTION OF THE DRAWINGS

FIGURE 1 is a cross sectional view of a dielectric mirror according to an example embodiment of this invention;
FIGURE 2 is a modeled wavelength (nm) versus visible transmission (Ts), film side reflection (BRs), glass side reflection (Ra) graph illustrating optical characteristics of a dielectric mirror according to an example of the Fig. 1 embodiment; and
FIGURE 3 is a modeled angle (degrees) versus glass side reflective a* and b* color values graph, illustrating angular distribution of reflected colors of a dielectric mirror according to the example of the Fig. 1 embodiment.
FIGURE 4 is a cross sectional view of a dielectric mirror according to an example embodiment of this invention.
FIGURES 5(a) and 5(b) are cross sectional views of a dielectric mirror according to example embodiments of this invention.

### DETAILED DESCRIPTION OF EXAMPLE EMBODIMENTS OF THE INVENTION

Referring now more particularly to the drawings in which reference numerals indicate like parts/materials throughout the several views.

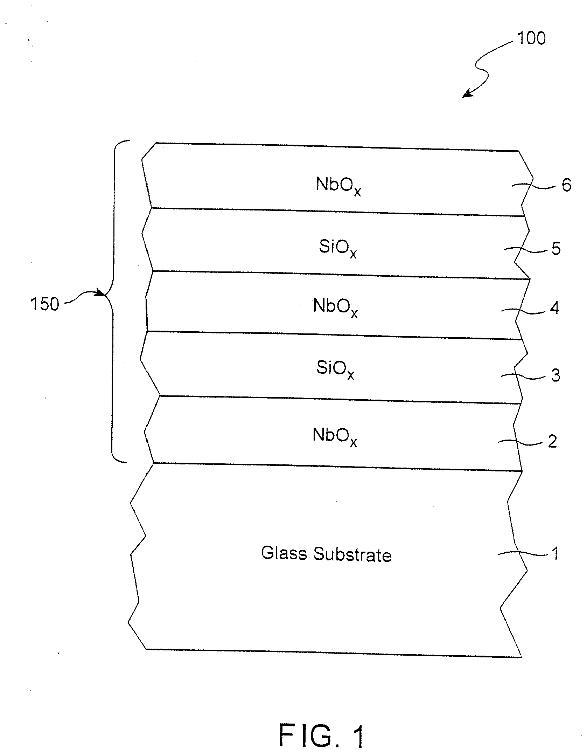

Fig. 1 is a cross sectional view of a dielectric mirror 100 according to certain example embodiments of this invention. The mirror includes a dielectric coating 150 which is on a glass substrate 1. Glass substrate 1 may be soda-lime-silica based glass or any other suitable type of glass, and may be from about 1-10 mm thick, more preferably from about 2-6 mm thick, in example embodiments of this invention. Alternatively, substrate 1 may be of quartz, silicon, or the like. The mirror coating 150 includes high index transparent dielectric layers 2, 4 and 6 of or including niobium oxide (e.g., Nb₂O₅, NbO₂ and/or NbO) and low index transparent dielectric layers 3 and 5 of or including silicon oxide (e.g., SiO₂ which may or may not be doped with aluminum and/or nitrogen). In certain example embodiments, one or both of the silicon oxide layers 3 and/or 5 may be doped with other material such as from about 1-8% aluminum and/or from about 1-10% nitrogen. One or more of layers 2, 4 and 6 may also be doped with other material in certain example instances. In the Fig. 1 embodiment, layer 6 is the outermost layer of the coating 150 and may be exposed to air. Each of layers 2-7 is considered "transparent" because each of these layers, standing alone, is substantially transparent to visible light (e.g., at least about 50% transparent, more preferably at least about 60% or 70% transparent to visible light).

High index transparent dielectric layers 2, 4 and 6 of or including niobium oxide may have a refractive index (n) of from about 2.15 to 2.5, more preferably from about 2.2 to 2.4, and most preferably from about 2.25 to 2.35 (at 550 nm). In certain alternative embodiments, the niobium oxide may be replaced with titanium oxide (e.g., TiO₂), zirconium oxide, hafnium oxide (e.g., HfO₂), cerium oxide (e.g., CeO₂), zinc sulfide, or bismuth oxide (e.g., Bi₂O₃) in one or more of high index layers 2, 4 and/or 6. Thus, in one such example, layer 6 may be of or including titanium oxide, while layers 2 and 4 are of or including niobium oxide, and layers 3 and 5 are of or including silicon oxide. Low index transparent dielectric layers 3 and 5 of or including silicon oxide may have a refractive index (n) of from about 1.4 to 1.7, more preferably from about 1.4 to 1.6, and most preferably from about 1.45 to 1.55 (all refractive index n values herein are measured at 550 nm).

Transparent dielectric layers 2-6 are preferably deposited by sputtering in example embodiments of this invention. For example, transparent dielectric layers 2, 4 and 6 of or including niobium oxide may be sputter deposited via at least one sputtering target of or including Nb, via sputtering in an atmosphere including a mixture of argon and reactive oxygen gases. And for example, transparent dielectric layers 3 and 5 of or including silicon oxide may be sputter deposited via at least one sputtering target of or including Si or SiAl, via sputtering in an atmosphere including a mixture of argon and reactive oxygen gases. Rotation C-Mag sputtering targets, or other types of targets, may be used. In sputtering operations, sufficient reactive oxygen gas may be used to achieve the refractive index values discussed herein. Ceramic targets may alternatively be used to sputter deposit one or more of these layers. While layers 2-6 are preferably deposited via sputtering, it is possible that they may be deposited via other techniques in alternative embodiments of this invention. While mirror coating 150 consists of five layers in the Fig. 1 embodiment, it is possible that additional layers may be provided in alternative embodiments.

Dielectric mirror 100, in the Fig. 1 embodiment and in other example embodiments, contains no metallic reflective layer (e.g., no Ag layer and no Al layer), but is nonetheless capable of realizing film side and/or glass side visible reflection of from about 50-90% (more preferably from about 60-80% and most preferably from about 65-75%) and visible transmission of from about 10-50% (more preferably from about 10-40%, even more preferably from about 20-40%, and most preferably from about 25-35%). The high reflectance values are achieved, despite no metallic reflective layers, by way of the large refractive index differences between adjacent layers in the coating 150 in combination with the layer thickness values discussed herein. In certain example embodiments, the glass side reflectance (reflectance measured from the glass 1 side of the mirror) and the film side reflectance (reflectance measured from the film 150 side of the mirror) may be substantially symmetric (e.g., the glass side reflectance and film side reflectance of the mirror may differ by no more than about 10%). The refractive index and thickness values herein may also be tailored to allow transmitted and reflected color values (e.g., a* and/or b* color values) to be substantially neutral. The dielectric mirrors 100 may be first or second surface mirrors in certain example embodiments. The dielectric mirror 100 may be used, for example, as a beamsplitter. The mirrors 100 may or may not be heat treated (e.g., thermally tempered and/or thermally bent) in certain example embodiments. In certain example instances, such dielectric mirrors 100 may be used in consumer, commercial and/or digital signage applications such as picture frames, bathroom mirrors, TVs, and/or electronic devices. Theses mirrors may be used for electronic mirrors or hidden TVs for consumers, security, commercial, and/or digital signage applications. In certain electronic applications, when the display is on, the screen image can be viewed through the glass 1, and when the display is off the mirror 100 has the appearance of a mirror, given the reflectance and visible transmission values of the mirror discussed herein.

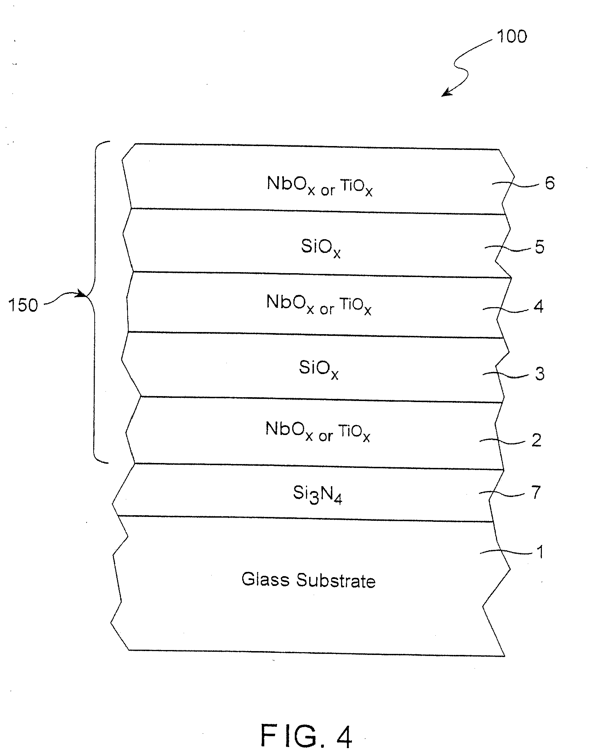

Fig. 4 is a cross sectional view of a dielectric mirror according to another example embodiment of this invention. The Fig. 4 embodiment is the same as the Fig. 1 embodiment, except that transparent dielectric barrier layer 7 is provided between the glass substrate 1 and high index layer 2. The barrier layer 7 is of or including silicon nitride (e.g., Si₃N₄) in certain example embodiments of this invention. In certain example embodiments, silicon nitride based barrier layer 7 may be doped with other material such as from about 1-8% aluminum and/or from about 1-10% oxygen. The Fig. 4 embodiment is particular useful in heat treated (e.g., thermally tempered) embodiments, where the barrier layer 7 helps prevent or reduce migration of elements (e.g., Na) from the glass substrate into the coating during the high temperature heat treatment. Such heat treatment (e.g., thermal tempering) may include, for example heating the coated article in an oven or the like at temperature(s) of at least about 580 degrees C, more preferably of at least about 600 degrees C. The mirror of the Fig. 4 embodiment may or may not be heat treated (e.g., thermally tempered) in example embodiments of this invention.

In certain example embodiments of this invention, transparent dielectric layer 2 of or including niobium oxide may be from about 70-140 nm thick, more preferably from about 80-130 nm thick, even more preferably from about 90-120 nm thick, with an example thickness being about 105 nm. In certain example embodiments of this invention, transparent dielectric layer 4 of or including niobium oxide may be from about 20-90 nm thick, more preferably from about 30-80 nm thick, even more preferably from about 40-65 nm thick, with an example thickness being about 52 nm. Similarly, in certain example embodiments of this invention, transparent dielectric layer 6 of or including niobium oxide may be from about 20-90 nm thick, more preferably from about 30-80 nm thick, even more preferably from about 40-70 nm thick, with an example thickness being about 54 nm. To realize the desired reflectance and transmission values herein, niobium oxide based layer 2 is preferably substantially thicker than each of niobium oxide based layers 4 and 6. For example, in certain example embodiments, niobium oxide based layer 2 is at least about 10 nm thicker (more preferably at least about 25 nm thicker, and most preferably at least about 40 nm thicker) than one or both of niobium oxide based layers 4 and/or 6.

In certain example embodiments of this invention, transparent dielectric layer 3 of or including silicon oxide may be from about 30-140 nm thick, more preferably from about 40-120 nm thick, even more preferably from about 60-120 nm thick, even more preferably from about 75-100 nm thick, with an example thickness being about 88 nm. Similarly, in certain example embodiments of this invention, transparent dielectric layer 5 of or including silicon oxide may be from about 30-140 nm thick, more preferably from about 40-120 nm thick, even more preferably from about 60-120 nm thick, even more preferably from about 75-100 nm thick, with an example thickness being about 88 nm. Thus, the silicon oxide based layers 3 and 5 may be of substantially the same thickness in certain example embodiments (i.e., the thickness of silicon oxide based layers 3 and 5 differs by no more than about 20 nm, more preferably by no more than about 10 nm, in certain example embodiments). And in certain example embodiments, one or both of silicon oxide based layers 3 and/or 5 are at least about 10 nm (more preferably at least about 15 nm) thinner than niobium oxide based layer 2, and is/are at least about 10 nm (more preferably at least about 20 nm) thicker than niobium oxide based layer(s) 4 and/or 6.

In certain example embodiments, transparent dielectric barrier layer 7 (which may also be sputter-deposited) may be from about 5-150 nm thick, more preferably from about 10-40 nm thick, even more preferably from about 10-30 nm thick, with an example thickness being about 20 nm. Barrier layer 7 may have a refractive index of from about 1.95 to 2.10, more preferably from about 2.0 to 2.05, in certain example embodiments.

### EXAMPLE 1

An example dielectric mirror 100, which is an example that does not form part of the invention, was made as follows:
clear glass substrate 1
niobium oxide layer 2: 105 nm thick
silicon oxide layer 3: 88 nm thick
niobium oxide layer 4: 53 nm thick
silicon oxide layer 5: 88 nm thick
niobium oxide layer 6: 53 nm thick

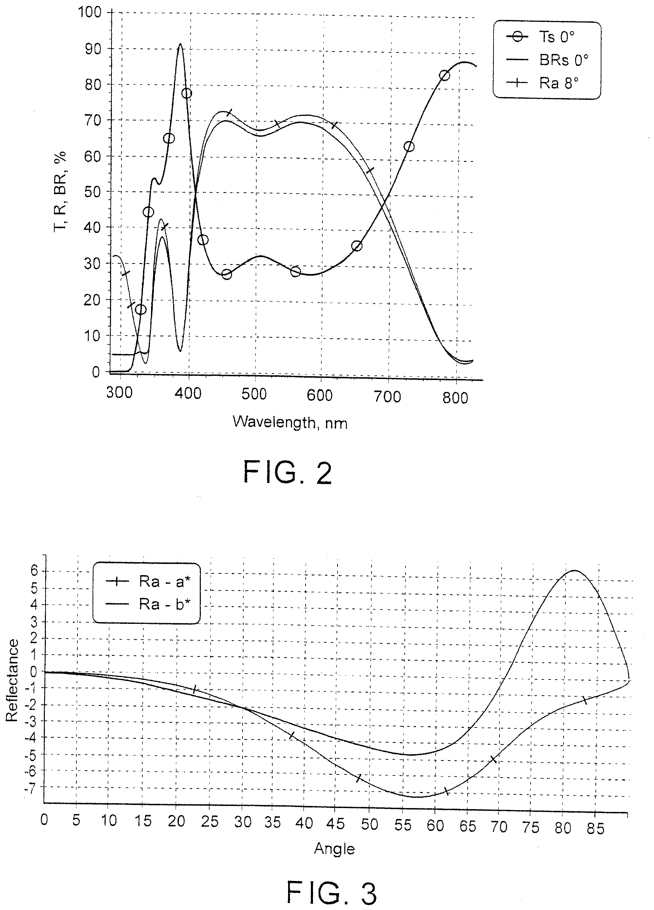

Optical properties of this example mirror are shown in Figs. 2-3. A clear glass substrate was used. Fig. 2 is a modeled wavelength (nm) versus visible transmission (Ts), film side reflection (BRs), glass side reflection (Ra) graph illustrating optical characteristics of this example dielectric mirror; and Fig. 3 is a modeled angle (degrees) versus glass side reflective a* and b* color values graph, illustrating angular distribution of reflected colors of this example dielectric mirror. The following visible optical values (L*, visible transmission values (TY or TaY), visible reflectance values (film side RfY or BRa, glass side RgY or Ra), and visible transmissive/reflective color values a* and b*) were measured:

**Table 1**

| | a* | b* | L* | Y |
|---|---|---|---|---|
| Transmission: | -0.53 | +0.17 | 62.42 | 30% |
| Glass side reflectance (Rg): | -0.04 | -0.08 | 86.88 | 70% |
| Film side reflectance (Rf): | -1.28 | +0.01 | 85.85 | 68% |

Thus, it can be seen from the above Table 1 that the dielectric mirror had a visible transmission of 30%, a visible glass side reflectance of 70%, and a visible film side reflectance of 68% (the glass side and film side reflectance was substantially the same). It can also be seen that the mirror had neutral (from -2 to +2) glass side and film side reflective color values a* and b*. These were measured in accordance with Ill. C, 2 degree. And it can be seen in Fig. 3 that the angular distribution of the reflected a* and b* color values showed no large fluctuations at angles from about 0-30 degrees.

An advantage of the mirror is that ultraviolet (UV) transmission at 385 nm is at least about 70%, more preferably at least about 75%, and most preferably at least about 80% or 85%, as shown in Fig. 2 (note the Ts curve in Fig. 2 at 385 nm), although the visible transmission is less than about 40%, more preferably less than about 35% as also shown in Fig. 2. This high UV transmission, coupled with the low visible transmission and high reflectance values, allows the mirror to be particularly suited for certain applications where high UV is desired.

### EXAMPLE 2

Another example dielectric mirror 100, which is an example that does not form part of the invention, was made as follows:
clear glass substrate 1
niobium oxide layer 2: 108 nm thick
silicon oxide layer 3: 88 nm thick
niobium oxide layer 4: 55 nm thick
silicon oxide layer 5: 90 nm thick
niobium oxide layer 6: 53 nm thick

Optical properties of this Example 2 mirror are as follows, regarding visible transmission (Ts or TY), visible reflectance (film side RfY and glass side RgY visible reflectance), and color values a*, b*:

**Table 2**

| | a* | b* | L* | Y |
|---|---|---|---|---|
| Transmission: | -0.5 | -0.8 | 60.4 | 29% |
| Glass side reflectance (Rg): | -0.6 | 0.7 | 86.8 | 70% |
| Film side reflectance (Rf): | 0.1 | 0.5 | 87.5 | 71% |

Thus, it can be seen from the above Table 2 that the dielectric mirror of this example had a visible transmission of 29%, a visible glass side reflectance of 70%, and a visible film side reflectance of 71% (the glass side and film side visible reflectance was substantially the same). It can also be seen that the mirror had neutral (from -2 to +2) glass side and film side reflective color values a* and b*. These were measured in accordance with Ill. C, 2 degree.

### EXAMPLE 3

Another example dielectric mirror 100, which is an example that does not form part of the invention, was made as follows:
clear glass substrate 1
silicon nitride layer 7: 20 nm thick
niobium oxide layer 2: 98 nm thick
silicon oxide layer 3: 88 nm thick
niobium oxide layer 4: 55 nm thick
silicon oxide layer 5: 90 nm thick
niobium oxide layer 6: 53 nm thick

Optical properties of this Example 3 mirror are as follows, regarding visible transmission (Ts or TY), visible reflectance (film side RfY and glass side RgY visible reflectance), and color values a*, b*:

**Table 3**

| | a* | b* | L* | Y |
|---|---|---|---|---|
| Transmission: | 1.8 | -1.4 | 60.5 | 29% |
| Glass side reflectance (Rg): | -2.6 | 0.9 | 86.4 | 69% |
| Film side reflectance (Rf): | -1.4 | 0.8 | 87.4 | 71% |

Thus, it can be seen from the above Table 3 that the dielectric mirror of this example (e.g., see Fig. 4) had a visible transmission of 29%, a visible glass side reflectance of 69%, and a visible film side reflectance of 71% (the glass side and film side visible reflectance was substantially the same). It can also be seen that the mirror had neutral (from -2 to +2) film side reflective color values a* and b*. These were measured in accordance with Ill. C, 2 degree.

### EXAMPLE 4

Another example dielectric mirror 100, which is an example that does not form part of the invention, was made as follows:
clear glass substrate 1
niobium oxide layer 2: 124 nm thick
silicon oxide layer 3: 45 nm thick
niobium oxide layer 4: 72 nm thick
silicon oxide layer 5: 68 nm thick
niobium oxide layer 6: 71 nm thick

Optical properties of this Example 4 mirror are as follows, regarding visible transmission (Ts or TY), visible reflectance (film side RfY and glass side RgY visible reflectance), and color values a*, b*:

**Table 4**

| | a* | b* | L* | Y |
|---|---|---|---|---|
| Transmission: | -2.7 | -3.1 | 69.0 | 39% |
| Glass side reflectance (Rg): | 0.4 | 2.5 | 80.9 | 58% |
| Film side reflectance (Rf): | 1.6 | 2.6 | 81.9 | 60% |

Thus, it can be seen from the above Table 4 that the dielectric mirror of this example had a visible transmission of 39%, a visible glass side reflectance of 58%, and a visible film side reflectance of 60% (the glass side and film side visible reflectance was substantially the same). It can also be seen that the mirror had substantially neutral (from -3.0 to +3.0) glass side and film side reflective color values a* and b*. These were measured in accordance with 111. C, 2 degree.

### EXAMPLE 5

Another example dielectric mirror 100, which is an example that does not form part of the invention, was made as follows:
clear glass substrate 1
silicon nitride layer 7: 21.4 nm thick
niobium oxide layer 2: 106.6 nm thick
silicon oxide layer 3: 43.3 nm thick
niobium oxide layer 4: 59.4 nm thick
silicon oxide layer 5: 80.1 nm thick
niobium oxide layer 6: 67.3 nm thick

Optical properties of this Example 5 mirror are as follows, regarding visible transmission (Ts or TY), visible reflectance (film side RfY and glass side RgY visible reflectance), and color values a*, b*:

**Table 5**

| | a* | b* | L* | Y |
|---|---|---|---|---|
| Transmission: | -0.1 | -1.2 | 68.7 | 39% |
| Glass side reflectance (Rg): | 0.1 | 0.8 | 81 | 58% |
| Film side reflectance (Rf): | 0.3 | 0.4 | 82 | 60% |

Thus, it can be seen from the above Table 5 that the dielectric mirror of this example had a visible transmission of 39%, a visible glass side reflectance of 58%, and a visible film side reflectance of 60% (the glass side and film side visible reflectance was substantially the same). It can also be seen that the mirror had neutral (from -2 to +2) glass side and film side reflective color values a* and b*. These were measured in accordance with Ill. C, 2 degree.

### EXAMPLE 6

Another example dielectric mirror 100, which is an example that does not form part of the invention, was made as follows:
clear glass substrate 1
niobium oxide layer 2: 19.5 nm thick
silicon oxide layer 3: 27 nm thick
niobium oxide layer 4: 59.1 nm thick
silicon oxide layer 5: 91.8 nm thick
niobium oxide layer 6: 57.6 nm thick

Optical properties of this Example 6 mirror are as follows, regarding visible transmission (Ts or TY), visible reflectance (film side RfY and glass side RgY visible reflectance), and color values a*, b*:

**Table 6**

| | a* | b* | L* | Y |
|---|---|---|---|---|
| Transmission: | -0.1 | -0.1 | 74.6 | 48% |
| Glass side reflectance (Rg): | -1.6 | 0.2 | 76.1 | 50% |
| Film side reflectance (Rf): | -0.6 | 0.2 | 77.0 | 51% |

Thus, it can be seen from the above Table 6 that the dielectric mirror of this example had a visible transmission of 48%, a visible glass side reflectance of 50%, and a visible film side reflectance of 51% (the glass side and film side visible reflectance was substantially the same). It can also be seen that the mirror had neutral (from -2 to +2) glass side and film side reflective color values a* and b*. These were measured in accordance with Ill. C, 2 degree.

### EXAMPLE 7

Another example dielectric mirror 100, which is an example that does not form part of the invention, was made as follows:
clear glass substrate 1
silicon nitride layer 7: 20 nm thick
niobium oxide layer 2: 8.4 nm thick
silicon oxide layer 3: 20 nm thick
niobium oxide layer 4: 55.6 nm thick
silicon oxide layer 5: 89.4 nm thick
niobium oxide layer 6: 56.3 nm thick

Optical properties of this Example 7 mirror are as follows, regarding visible transmission (Ts or TY), visible reflectance (film side RfY and glass side RgY visible reflectance), and color values a*, b*:

**Table 7**

| | a* | b* | L* | Y |
|---|---|---|---|---|
| Transmission: | -0.1 | -0.1 | 74.6 | 48% |
| Glass side reflectance (Rg): | -1.6 | 0.2 | 76.1 | 50% |
| Film side reflectance (Rf): | -0.6 | 0.2 | 77.0 | 51% |

Thus, it can be seen from the above Table 7 that the dielectric mirror of this example had a visible transmission of 48%, a visible glass side reflectance of 50%, and a visible film side reflectance of 51% (the glass side and film side visible reflectance was substantially the same). It can also be seen that the mirror had neutral (from -2 to +2) glass side and film side reflective color values a* and b*. These were measured in accordance with Ill. C, 2 degree.

### EXAMPLE 8

Another example dielectric mirror 100, which is an example that does not form part of the invention, was made as follows:
clear glass substrate 1
niobium oxide layer 2: 9 nm thick
silicon oxide layer 3: 20 nm thick
niobium oxide layer 4: 85 nm thick
silicon oxide layer 5: 103 nm thick
niobium oxide layer 6: 30 nm thick

Optical properties of this Example 8 mirror are as follows, regarding visible transmission (Ts or TY), visible reflectance (film side RfY and glass side RgY visible reflectance), and color values a*, b*:

**Table 8**

| | a* | b* | L* | Y |
|---|---|---|---|---|
| Transmission: | -0.9 | -0.7 | 80.7 | 58% |
| Glass side reflectance (Rg): | -0.7 | 1.0 | 69.5 | 40% |
| Film side reflectance (Rf): | 0.2 | 0.9 | 70.2 | 41% |

Thus, it can be seen from the above Table 8 that the dielectric mirror of this example had a visible transmission of 58%, a visible glass side reflectance of 40%, and a visible film side reflectance of 41% (the glass side and film side visible reflectance was substantially the same). It can also be seen that the mirror had neutral (from -2 to +2) glass side and film side reflective color values a* and b*. These were measured in accordance with Ill. C, 2 degree.

### EXAMPLE 9

Another example dielectric mirror 100, which is an example that does not form part of the invention, was made as follows:
clear glass substrate 1
silicon nitride layer 7: 20 nm
niobium oxide layer 2: 8.4 nm thick
silicon oxide layer 3: 28.8 nm thick
niobium oxide layer 4: 60.3 nm thick
silicon oxide layer 5: 49 nm thick
niobium oxide layer 6: 80. 1 nm thick

Optical properties of this Example 9 mirror are as follows, regarding visible transmission (Ts or TY), visible reflectance (film side RfY and glass side RgY visible reflectance), and color values a*, b*:

**Table 9**

| | a* | b* | L* | Y |
|---|---|---|---|---|
| Transmission: | -0.8 | 0.6 | 81.2 | 59% |
| Glass side reflectance (Rg): | -0.3 | 0.4 | 68.2 | 38% |
| Film side reflectance (Rf): | 0.1 | -0.4 | 69.3 | 40% |

Thus, it can be seen from the above Table 9 that the dielectric mirror of this example had a visible transmission of 59%, a visible glass side reflectance of 38%, and a visible film side reflectance of 40% (the glass side and film side visible reflectance was substantially the same). It can also be seen that the mirror had neutral (from -2 to +2) glass side and film side reflective color values a* and b*. These were measured in accordance with Ill. C, 2 degree.

Examples 1-9 set forth above used clear glass substrates 1 and resulted in mirrors in each case having a glass side visible reflectance that was substantially the same as the mirror's film side visible reflectance. However, in embodiments of this invention symmetrical glass and film side visible reflectance is not always desirable. In certain instances, it may be desired to have asymmetric glass side and film side visible reflectance for a mirror. Several approaches to this have been provided in some examples that are not part of the invention and other examples that are according to the invention. of this invention. A first approach, not forming part of the invention, (e.g., see Example 10 below) is to use a grey glass substrate 1 instead of a clear glass substrate in any of the Fig. 1-4 embodiments, and it has been found that this will result in asymmetrical glass side versus film side visible reflectance. A second approach, which forms part of the invention, is to provide a symmetry adjusting layer (of or including NiCr, or NiCrOx) in the stack at a location designed to adjust the symmetry of the visible reflection between glass side and film side. With both approaches, mirrors can achieve glass side visible reflectance that is at least about 30% different than is the mirror's film side visible reflectance, more preferably at least about 40% different. Example 10 is an example of the first approach, where the glass substrate is adjusted to provided the asymmetry.

### EXAMPLE 10

Another example dielectric mirror 100, which is an example that does not form part of the invention, was made as follows:
grey glass substrate 1
niobium oxide layer 2: 105 nm thick
silicon oxide layer 3: 110 nm thick
niobium oxide layer 4: 40 nm thick
silicon oxide layer 5: 110 nm thick
niobium oxide layer 6: 45 nm thick

Optical properties of this Example 10 mirror are as follows, regarding visible transmission (Ts or TY), visible reflectance (film side RfY and glass side RgY visible reflectance), and color values a*, b* at a zero degree viewing angle:

**Table 10**

| | a* | b* | L* | Y |
|---|---|---|---|---|
| Transmission: | -0.2 | -2.2 | 44 | 14% |
| Glass side reflectance (Rg): | 0.4 | 0.5 | 86.5 | 69% |
| Film side reflectance (Rf): | -0.1 | -1.4 | 49.5 | 18% |

Thus, it can be seen from the above Table 10 that the dielectric mirror of this example had a visible transmission of 14%, a visible glass side reflectance of 69%, and a visible film side reflectance of 18% (the glass side and film side visible reflectance was non-symmetrical and substantially different). It can also be seen that the mirror had neutral (from -2 to +2) glass side and film side reflective color values a* and b*. These were measured in accordance with Ill. C, 2 degree. Surprisingly, providing a grey (gray) glass substrate in Example 10 provided the asymmetrical visible reflectance values and could be advantageous in certain instances. Thus, in certain example embodiments of this invention, for the mirror, the glass side visible reflectance is at least about 30% different from the film side visible reflectance, more preferably at least about 40% different.

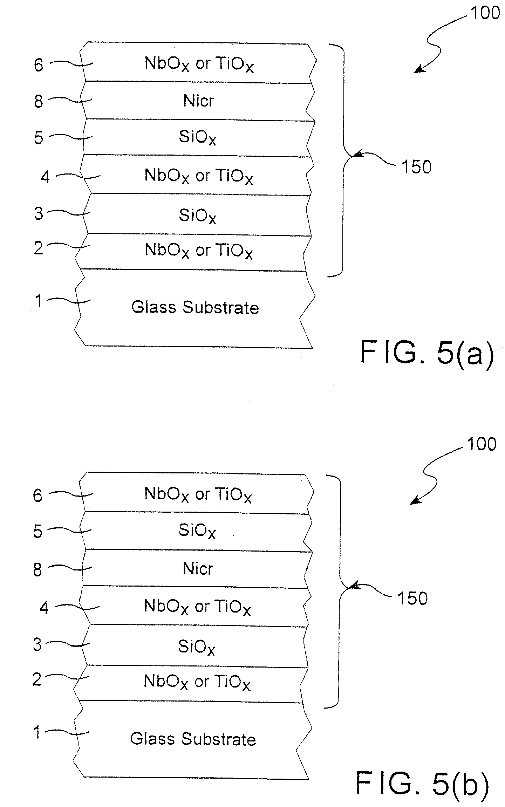

Examples 11 and 12 are examples of the second approach where a symmetry adjusting layer (of or including NiCr, or NiCrOx) is provided in the mirror stack at a location designed to adjust the symmetry of visible reflection between glass side and film side and cause it to be asymmetric. The mirror of Example 11 is shown in Fig. 5(a) and the mirror of Example 12 is generally shown in Fig. 5(b). The Fig. 5(a) and 5(b) embodiments are the same as the Fig. 1-4 embodiments discussed above, except that the additional symmetry adjusting layer 8 is provided in the stack. Of course, a silicon nitride inclusive layer 7 could also optionally be provided in the Fig. 5(a)-(b) embodiments if desired.

### EXAMPLE 11

An example dielectric mirror 100, which is an example of this invention, was made as follows:
clear glass substrate 1
niobium oxide layer 2: 130 nm thick
silicon oxide layer 3: 41 nm thick
niobium oxide layer 4: 67 nm thick
silicon oxide layer 5: 93 nm thick
NiCr symmetry adjusting layer 8: 20 nm thick
niobium oxide layer 6: 35.5 nm thick

### EXAMPLE 12

An example dielectric mirror 100, which is an example of this invention, was made as follows:
clear glass substrate 1
niobium oxide layer 2: 102 nm thick
silicon oxide layer 3: 95 nm thick
niobium oxide layer 4: 52 nm thick
NiCr symmetry adjusting layer 8: 10 nm thick
silicon oxide layer 5: 49 nm thick
niobium oxide layer 6: 65 nm thick

Providing the NiCr inclusive symmetry adjusting layer 8 results in an asymmetric visible reflectance between film side and glass side similar to that demonstrated above with Example 10. However, switching the location of the NiCr symmetry adjusting layer 8 (which may be slightly or significantly oxided) between the positions shown in Figs. 5(a) and 5(b) has been found to invert the asymmetry. In other words, high glass side visible reflectance and low film side visible reflectance can be achieved by using one of the layer 8 locations whereas low glass side visible reflectance and high film side visible reflectance can be achieved by using the other layer 8 location. In both of Examples 11-12, the mirror has a visible transmission of from about 18-20%. However, the glass side visible reflectance was 66% and the film side visible reflectance was 10% in one of the two examples, while the glass side visible reflectance was 30% and the film side visible reflectance was 73% in the other of the two examples. Thus, it will be appreciated that the NiCr based layer 8 is not the layer that creates the reflection (instead, the NiCr based layer 8 reduces the reflection from one of the sides based on where it is located), but it does cause the visible reflection to be asymmetric between glass side and film side which may be desirable in certain instances. In certain example embodiments of this invention, the symmetry adjusting layer 8 (of or including NiCr, which may or may not be oxided) is from about 3 to 50 nm thick, more preferably from about 5-45 nm thick, even more preferably from about 5 to 30 nm thick, and most preferably from about 10 to 20 nm thick.

It is noted that optical characteristics such as visible transmission, a* and b* values, glass side visible reflectance, and film side visible reflectance are measured herein without taking into account any optional paint layers or physical backings that may be applied to or house the mirror.

While a layer, layer system, coating, or the like, may be said to be "on" or "supported by" a substrate, layer, layer system, coating, or the like, other layer(s) may be provided therebetween. Thus, for example, the coatings or layers described above may be considered "on" and "supported by" the substrate and/or other coatings or layers even if other layer(s) are provided therebetween.

## Claims

1. A dielectric mirror (100) including a glass substrate (1) supporting a coating (150), the coating (150) comprising moving away from the glass substrate (1):
a first transparent dielectric high refractive index layer (2) comprising niobium oxide and/or titanium oxide, the first transparent dielectric high refractive index layer (2) having a thickness of from about 70-140 nm;
a second transparent dielectric low refractive index layer (3) comprising silicon oxide, the second transparent dielectric low refractive index layer (3) having a thickness of from about 30-140 nm;
a third transparent dielectric high refractive index layer (4) comprising niobium oxide and/or titanium oxide;
a fourth transparent dielectric low refractive index layer (5) comprising silicon oxide;
a fifth transparent dielectric high refractive index layer (6) comprising niobium oxide and/or titanium oxide;
wherein the first transparent dielectric high index layer (2) comprising niobium oxide and/or titanium oxide is at least 10 nm thicker than one or both of (a) the third transparent dielectric high refractive index layer (4) comprising niobium oxide and/or titanium oxide, and/or (b) the fifth transparent dielectric high index layer (6) comprising niobium oxide and/or titanium oxide;
wherein the coating (150) does not contain any metallic reflective layer based on Al or Ag; and
wherein the dielectric mirror (100) has (i) a film side visible reflectance or a glass side visible reflectance of from about 50-90%, and (ii) a visible transmission of from about 10-40%, **characterised in that** the glass side visible reflectance of the mirror (100) is at least about 30% higher or at least about 30% lower than is the film side visible reflectance of the mirror (100), and **in that** the mirror (100) further comprises a symmetry adjusting layer (8) located between the third transparent dielectric high refractive index layer (4) and the fifth transparent dielectric high refractive index layer (6), wherein the symmetry adjusting layer (8) comprises NiCr.

2. The mirror (100) of claim 1, wherein the first transparent dielectric high index layer (2) comprising niobium oxide and/or titanium oxide is at least 10 nm thicker than both of the third transparent dielectric high refractive index layer (4) and the fifth transparent dielectric high index layer (6).

3. The mirror (100) of any preceding claim, wherein the first transparent dielectric high index layer (2) comprising niobium oxide and/or titanium oxide is at least 25 nm thicker than one or both of the third transparent dielectric high refractive index layer (4) and/or the fifth transparent dielectric high index layer (6).

4. The mirror (100) of any preceding claim, wherein the first transparent dielectric high index layer (2) comprising niobium oxide and/or titanium oxide is at least 25 nm thicker than both of the third transparent dielectric high refractive index layer (4) and the fifth transparent dielectric high index layer (6).

5. The mirror of claim 1, wherein the symmetry adjusting layer (8) comprising NiCr is at least partially oxided.

6. The mirror (100) of any of claims 1-5, wherein the symmetry adjusting layer (8) is located between and contacting the third transparent dielectric high refractive index layer (4) and the fourth transparent dielectric low refractive index layer (5) comprising silicon oxide, or wherein the symmetry adjusting layer (8) is located between and contacting the fifth transparent dielectric high refractive index layer (6) and the fourth transparent dielectric low refractive index layer (5) comprising silicon oxide.

7. The mirror (100) of any preceding claim, wherein the first transparent dielectric high refractive index layer (2) comprises niobium oxide, and/or wherein the third transparent dielectric high refractive index layer (4) comprises niobium oxide, and/or wherein the fifth transparent dielectric high refractive index layer (6) comprises niobium oxide.

8. The mirror (100) of any preceding claim, wherein the third transparent dielectric high refractive index layer (4) is from about 30-80 nm thick.

9. The mirror (100) of any preceding claim, wherein the fourth transparent dielectric low refractive index layer (5) comprising silicon oxide is from about 40-120 nm thick.

10. The mirror (100) of any preceding claim, wherein the fifth transparent dielectric high refractive index layer (6) is from about 30-80 nm thick.

11. The mirror (100) of any preceding claim, wherein the first transparent dielectric high refractive index layer (2) directly contacts the glass substrate (1).

12. The mirror (100) of any of claims 1-10, further comprising a layer comprising silicon nitride (7) located between and contacting the glass substrate (1) and the first transparent dielectric high refractive index layer (2).

13. The mirror (100) of any preceding claim, wherein the second transparent dielectric low refractive index layer comprising silicon oxide (3) is located between and directly contacting the first (2) and third (4) transparent dielectric high refractive index layers.

14. The mirror (100) of any preceding claim, wherein the first (2), third (4), and fifth (6) transparent dielectric high refractive index layers each have a refractive index of from about 2.15 to 2.5.

15. The mirror (100) of any preceding claim, wherein the second (3) and fourth (5) transparent dielectric low refractive index layers comprising silicon oxide each have a refractive index of from about 1.4 to 1.7.

## Patentansprüche

1. Dielektrischer Spiegel (100) mit einem Glassubstrat (1), das eine Beschichtung (150) trägt, wobei die Beschichtung (150) in Richtung weg von dem Glassubstrat (1) umfasst:
eine erste transparente dielektrische Schicht mit hohem Brechungsindex (2), die Nioboxid und/oder Titanoxid umfasst, wobei die erste transparente dielektrische Schicht mit hohem Brechungsindex (2) eine Dicke von ungefähr 70-140 nm aufweist;
eine zweite transparente dielektrische Schicht (3) mit niedrigem Brechungsindex, die Siliziumoxid umfasst, wobei die zweite transparente dielektrische Schicht (3) mit niedrigem Brechungsindex eine Dicke von ungefähr 30-140 nm aufweist;
eine dritte transparente dielektrische Schicht mit hohem Brechungsindex (4), die Nioboxid und/oder Titanoxid umfasst;
eine vierte transparente dielektrische Schicht (5) mit niedrigem Brechungsindex, die Siliziumoxid umfasst;
eine fünfte transparente dielektrische Schicht mit hohem Brechungsindex (6), die Nioboxid und/oder Titanoxid umfasst;
wobei die erste transparente dielektrische Schicht mit hohem Brechungsindex (2), die Nioboxid und/oder Titanoxid umfasst, mindestens 10 nm dicker ist als eine oder beide von (a) der dritten transparenten dielektrischen Schicht mit hohem Brechungsindex (4), die Nioboxid und/oder Titanoxid umfasst, und/oder (b) der fünften transparenten dielektrischen Schicht mit hohem Brechungsindex (6), die Nioboxid und/oder Titanoxid umfasst;
wobei die Beschichtung (150) keine metallische Reflexionsschicht auf Basis von Al oder Ag enthält; und
wobei der dielektrische Spiegel (100) (i) ein filmseitig sichtbares Reflexionsvermögen oder ein glasseitig sichtbares Reflexionsvermögen von ungefähr 50-90% und (ii) eine sichtbare Durchlässigkeit von ungefähr 10-40% aufweist, **dadurch gekennzeichnet, dass**
das glasseitige sichtbare Reflexionsvermögen des Spiegels (100) mindestens ungefähr 30% höher oder mindestens ungefähr 30% niedriger ist als das filmseitige sichtbare Reflexionsvermögen des Spiegels (100), und
dass der Spiegel (100) ferner eine Symmetrieeinstellschicht (8) umfasst, die sich zwischen der dritten transparenten dielektrischen Schicht mit hohem Brechungsindex (4) und der fünften transparenten dielektrischen Schicht mit hohem Brechungsindex (6) befindet, wobei die Symmetrieeinstellschicht (8) NiCr umfasst.

2. Spiegel (100) nach Anspruch 1, wobei die erste transparente dielektrische Schicht mit hohem Brechungsindex (2), die Nioboxid und/oder Titanoxid umfasst, mindestens 10 nm dicker ist als sowohl die dritte transparente dielektrische Schicht mit hohem Brechungsindex (4) als auch die fünfte transparente dielektrische Schicht mit hohem Brechungsindex (6).

3. Spiegel (100) nach einem der vorhergehenden Ansprüche, wobei die erste transparente dielektrische Schicht mit hohem Brechungsindex (2), die Nioboxid und/oder Titanoxid umfasst, mindestens 25 nm dicker ist als eine oder beide von der dritten transparenten dielektrischen Schicht mit hohem Brechungsindex (4) und/oder der fünften transparenten dielektrischen Schicht mit hohem Brechungsindex (6).

4. Spiegel (100) nach einem der vorhergehenden Ansprüche, wobei die erste transparente dielektrische Schicht mit hohem Brechungsindex (2), die Nioboxid und/oder Titanoxid umfasst, mindestens 25 nm dicker ist als sowohl die dritte transparente dielektrische Schicht mit hohem Brechungsindex (4) als auch die fünfte transparente dielektrische Schicht mit hohem Brechungsindex (6).

5. Spiegel nach Anspruch 1, wobei die Symmetrieeinstellschicht (8), die NiCr umfasst, zumindest teilweise oxidiert ist.

6. Spiegel (100) nach einem der Ansprüche 1-5, wobei sich die Symmetrieeinstellschicht (8) zwischen der dritten transparenten dielektrischen Schicht mit hohem Brechungsindex (4) und der vierten transparenten dielektrischen Schicht mit niedrigem Brechungsindex (5), die Siliziumoxid umfasst, befindet und mit diesen in Kontakt ist, oder wobei sich die Symmetrieeinstellschicht (8) zwischen der fünften transparenten dielektrischen Schicht mit hohem Brechungsindex (6) und der vierten transparenten dielektrischen Schicht mit niedrigem Brechungsindex (5), die Siliziumoxid umfasst, befindet.

7. Spiegel (100) nach einem der vorhergehenden Ansprüche, wobei die erste transparente dielektrische Schicht mit hohem Brechungsindex (2) Nioboxid umfasst, und/oder wobei die dritte transparente dielektrische Schicht mit hohem Brechungsindex (4) Nioboxid umfasst, und/oder wobei die fünfte transparente dielektrische Schicht mit hohem Brechungsindex (6) Nioboxid umfasst.

8. Spiegel (100) nach einem der vorhergehenden Ansprüche, wobei die dritte transparente dielektrische Schicht mit hohem Brechungsindex (4) ungefähr 30-80 nm dick ist.

9. Spiegel (100) nach einem der vorhergehenden Ansprüche, wobei die vierte transparente dielektrische Schicht (5) mit niedrigem Brechungsindex, die Siliziumoxid umfasst, ungefähr 40-120 nm dick ist.

10. Spiegel (100) nach einem der vorhergehenden Ansprüche, wobei die fünfte transparente dielektrische Schicht mit hohem Brechungsindex (6) ungefähr 30-80 nm dick ist.

11. Spiegel (100) nach einem der vorhergehenden Ansprüche, wobei die erste transparente dielektrische Schicht mit hohem Brechungsindex (2) das Glassubstrat (1) direkt kontaktiert.

12. Spiegel (100) nach einem der Ansprüche 1-10, ferner umfassend eine Schicht, die Siliziumnitrid (7) umfasst, die sich zwischen dem Glassubstrat (1) und der ersten transparenten dielektrischen Schicht mit hohem Brechungsindex (2) befindet und mit diesen in Kontakt ist.

13. Spiegel (100) nach einem der vorhergehenden Ansprüche, wobei sich die zweite transparente dielektrische Schicht mit niedrigem Brechungsindex, die Siliziumoxid (3) umfasst, zwischen der ersten (2) und dritten (4) transparenten dielektrischen Schicht mit hohem Brechungsindex befindet und mit diesen in direktem Kontakt ist.

14. Spiegel (100) nach einem der vorhergehenden Ansprüche, wobei die erste (2), dritte (4) und fünfte (6) transparente dielektrische Schicht mit hohem Brechungsindex jeweils einen Brechungsindex von ungefähr 2,15 bis 2,5 aufweisen.

15. Spiegel (100) nach einem der vorhergehenden Ansprüche, wobei die zweite (3) und vierte (5) transparente dielektrische Schicht mit niedrigem Brechungsindex, die Siliziumoxid umfassen, jeweils einen Brechungsindex von etwa 1,4 bis 1,7 aufweisen.

## Revendications

1. Miroir diélectrique (100) comprenant un substrat en verre (1) supportant un revêtement (150), le revêtement (150) comprenant, en s'écartant du substrat en verre (1) :
une première couche diélectrique transparente à indice de réfraction élevé (2) comprenant de l'oxyde de niobium et/ou de l'oxyde de titane, la première couche diélectrique transparente à indice de réfraction élevé (2) ayant une épaisseur comprise entre environ 70 et 140 nm ;
une deuxième couche diélectrique transparente à indice de réfraction faible (3) comprenant de l'oxyde de silicium, la deuxième couche diélectrique transparente à indice de réfraction faible (3) ayant une épaisseur comprise entre environ 30 et 140 nm ;
une troisième couche diélectrique transparente à indice de réfraction élevé (4) comprenant de l'oxyde de niobium et/ou de l'oxyde de titane ;
une quatrième couche diélectrique transparente à indice de réfraction faible (5) comprenant de l'oxyde de silicium ;
une cinquième couche diélectrique transparente à indice de réfraction élevé (6) comprenant de l'oxyde de niobium et/ou de l'oxyde de titane ;
la première couche diélectrique transparente à indice de réfraction élevé (2) comprenant de l'oxyde de niobium et/ou de l'oxyde de titane étant au moins 10 nm plus épaisse que (a) la troisième couche diélectrique transparente à indice de réfraction élevé (4) comprenant de l'oxyde de niobium et/ou de l'oxyde de titane, et/ou que (b) la cinquième couche diélectrique transparente à indice de réfraction élevé (6) comprenant de l'oxyde de niobium et/ou de l'oxyde de titane ;
le revêtement (150) ne contenant pas de couche réfléchissante métallique à base d'Al ou d'Ag ; et
le miroir diélectrique (100) ayant (i) une réflectance visible côté film ou une réflectance visible côté verre comprise entre environ 50 et 90 %, et (ii) une transmission visible comprise entre environ 10 et 40 %,
**caractérisé par le fait que**
la réflectance visible côté verre du miroir (100) est au moins environ 30 % plus élevée ou au moins environ 30 % plus faible que la réflectance visible côté film du miroir (100), et **par le fait que**
le miroir (100) comprend en outre une couche d'ajustement de symétrie (8) située entre la troisième couche diélectrique transparente à indice de réfraction élevé (4) et la cinquième couche diélectrique transparente à indice de réfraction élevé (6), la couche d'ajustement de symétrie (8) comprenant du NiCr.

2. Miroir (100) selon la revendication 1, dans lequel la première couche diélectrique transparente à indice de réfraction élevé (2) comprenant de l'oxyde de niobium et/ou de l'oxyde de titane est au moins 10 nm plus épaisse qu'à la fois la troisième couche diélectrique transparente à indice de réfraction élevé (4) et la cinquième couche diélectrique transparente à indice de réfraction élevé (6).

3. Miroir (100) selon l'une quelconque des revendications précédentes, dans lequel la première couche diélectrique transparente à indice de réfraction élevé (2) comprenant de l'oxyde de niobium et/ou de l'oxyde de titane est au moins 25 nm plus épaisse qu'une ou les deux de la troisième couche diélectrique transparente à indice de réfraction élevé (4) et/ou la cinquième couche diélectrique transparente à indice de réfraction élevé (6).

4. Miroir (100) selon l'une quelconque des revendications précédentes, dans lequel la première couche diélectrique transparente à indice de réfraction élevé (2) comprenant de l'oxyde de niobium et/ou de l'oxyde de titane est au moins 25 nm plus épaisse qu'à la fois la troisième couche diélectrique transparente à indice de réfraction élevé (4) et la cinquième couche diélectrique transparente à indice de réfraction élevé (6).

5. Miroir selon la revendication 1, dans lequel la couche d'ajustement de symétrie (8) comprenant du NiCr est au moins partiellement oxydée.

6. Miroir (100) selon l'une quelconque des revendications 1 à 5, dans lequel la couche d'ajustement de symétrie (8) est située entre et en contact avec la troisième couche diélectrique transparente à indice de réfraction élevé (4) et la quatrième couche diélectrique transparente à indice de réfraction faible (5) comprenant de l'oxyde de silicium, ou la couche d'ajustement de symétrie (8) est située entre et en contact avec la cinquième couche diélectrique transparente à indice de réfraction élevé (6) et la quatrième couche diélectrique transparente à indice de réfraction faible (5) comprenant de l'oxyde de silicium.

7. Miroir (100) selon l'une quelconque des revendications précédentes, dans lequel la première couche diélectrique transparente à indice de réfraction élevé (2) comprend de l'oxyde de niobium, et/ou la troisième couche diélectrique transparente à indice de réfraction élevé (4) comprend de l'oxyde de niobium, et/ou la cinquième couche diélectrique transparente à indice de réfraction élevé (6) comprend de l'oxyde de niobium.

8. Miroir (100) selon l'une quelconque des revendications précédentes, dans lequel la troisième couche diélectrique transparente à indice de réfraction élevé (4) est d'environ 30-80 nm d'épaisseur.

9. Miroir (100) selon l'une quelconque des revendications précédentes, dans lequel la quatrième couche diélectrique transparente à indice de réfraction faible (5) comprenant de l'oxyde de silicium est d'environ 40-120 nm d'épaisseur.

10. Miroir (100) selon l'une quelconque des revendications précédentes, dans lequel la cinquième couche diélectrique transparente à indice de réfraction élevé (6) est d'environ 30-80 nm d'épaisseur.

11. Miroir (100) selon l'une quelconque des revendications précédentes, dans lequel la première couche diélectrique transparente à indice de réfraction élevé (2) est directement en contact avec le substrat en verre (1).

12. Miroir (100) selon l'une quelconque des revendications 1 à 10, comprenant en outre une couche comprenant du nitrure de silicium (7) située entre et en contact avec le substrat en verre (1) et la première couche diélectrique transparente à indice de réfraction élevé (2).

13. Miroir (100) selon l'une quelconque des revendications précédentes, dans lequel la deuxième couche diélectrique transparente à indice de réfraction faible (3) est située entre et directement en contact avec les première (2) et troisième (4) couches diélectriques transparentes à indice de réfraction élevé.

14. Miroir (100) selon l'une quelconque des revendications précédentes, dans lequel les première (2), troisième (4) et cinquième (6) couches diélectriques transparentes à indice de réfraction élevé ont chacune un indice de réfraction d'environ 2,15 à 2,5.

15. Miroir (100) selon l'une quelconque des revendications précédentes, dans lequel les deuxième (3) et quatrième (5) couches diélectriques transparentes à indice de réfraction faible comprenant de l'oxyde de silicium ont chacune un indice de réfraction d'environ 1,4 à 1,7.
